# FASCICULE DE BREVET EUROPEEN

(11) **EP 1 171 625 B1**
(45) Date de publication et mention de la délivrance du brevet: **19.01.2005**
(21) Numéro de dépôt: 99957183.9
(22) Date de dépôt: 22.06.1999
(51) Int. Cl.: C12P 19/04, C08B 37/00, A23L 1/054

(54) **POLYSACCHARIDE PURIFIE D'"ALTEROMONAS MACLEODII" ET SES UTILISATIONS**
GEREINIGTE POLYSACCHARIDE AUS "ALTEROMONAS MACLEODII" UND SEINE VERWENDUNGEN
PURIFIED "ALTEROMONAS MACLEODII" POLYSACCHARIDE AND ITS USES

(30) Priorité: 22.06.1998 FR 9807839
(43) Date de publication de la demande: 16.01.2002
(73) Titulaire: INSTITUT FRANCAIS DE RECHERCHE POUR L'EXPLOITATION DE LA MER (IFREMER), 92138 Issy-les-Moulineaux Cedex (FR); Cooperative Laitiere de Ploudaniel, 29260 Ploudaniel (FR)
(72) Inventeur: ROUGEAUX, Hélène, 29200 Brest (FR); GUEZENNEC, Jean, 29280 Plouzane (FR)
(74) Mandataire: Vialle-Presles, Marie José
(86) Numéro de dépôt international: PCT/FR1999/001490
(87) Numéro de publication internationale: WO 1999/067411

(56) Documents cités:
- FR-A- 2 701 488
- US-A- 5 071 976
- ROUGEAUX H ET AL: "NOVEL BACTERIAL EXOPOLYSACCARIDES FROM DEEP-SEA HYDROTHERMAL VENTS" CARBOHYDRATE POLYMERS, vol. 31, no. 4, décembre 1996 (1996-12), pages 237-242, XP000683378
- PATENT ABSTRACTS OF JAPAN vol. 009, no. 001 (C-259), 5 janvier 1985 (1985-01-05) & JP 59 156253 A (NAKANO SUTEN:KK), 5 septembre 1984 (1984-09-05)
- PATENT ABSTRACTS OF JAPAN vol. 011, no. 003 (C-395), 7 janvier 1987 (1987-01-07) & JP 61 183301 A (NAKANO VINEGAR CO LTD), 16 août 1986 (1986-08-16)
- RAGUENES G. ET AL: 'Description of a New Polymer-Secreting Bacterium from a Deep-Sea Hydrothermal Vent, Alteromonas macleodii subsp. fijiensis, and Preliminary Characterization of the Polymer' APPLIED AND ENVIRONMENTAL MICROBIOLOGY vol. 62, no. 1, Janvier 1996, WASHINGTON, US, pages 67 - 73

## Description

La présente invention est relative à un nouveau polysaccharide, produit par une bactérie marine.

La sous-espèce bactérienne *Alteromonas macleodii* subsp. *fijiensis,* a été isolée à partir de sources hydrothermales sous-marines. Lorsqu'elle est cultivée en conditions de laboratoire sur un milieu riche en glucose, cette bactérie sécrète des exopolysaccharides en grande quantité. Les caractéristiques morphologiques, physiologiques et phylogénétiques *d'Alteromonas macleodii* subsp. *fijiensis* sont indiquées dans la publication de RAGUENES et al., [Applied and Environmental Microbiology, 62(1), pp. 67-73, (1996)].

Cette publication donne également des indications sur la composition globale du mélange polysaccharidique produit par une souche d'*Alteromonas macleodii* subsp. *fijiensis* dénommée ST716 cultivée sur milieu enrichi en glucose, et récupéré à partir de ce milieu par précipitation à l'éthanol.

Ce mélange polysaccharidique comprend (pourcentages en masse) 10,5% de glucose, 11,1% de galactose, 4,4% de mannose, 5% de mannose pyruvaté, 12,2% d'acide glucuronique et 6,3% d'acide galacturonique, correspondant à des rapports molaires respectifs en glucose, galactose, mannose, acide glucuronique, et acide galacturonique de 1,0/1,1/0,6/1,1/0,6. Sa teneur en sulfates est de 5%.

Les Inventeurs ont cherché à identifier les constituants de ce mélange, et ont purifié à partir de celui-ci un nouveau polysaccharide.

Ce polysaccharide purifié, qui fait l'objet de la présente invention, est constitué de glucose, de galactose, d'acide glucuronique, d'acide galacturonique, et de mannose pyruvaté.

Il est caractérisé en ce que ces différents constituants sont respectivement représentés dans les rapports molaires 1/1/1/2/1, et associés en une unité répétitive hexasaccharidique dans laquelle trois résidus osidiques forment un enchaînement principal, dont le point de branchement est constitué d'un résidu d'acide galacturonique. Sur ce dernier est greffée une chaîne latérale se terminant par un résidu de mannose pyruvaté en position 4 et en position 6.

Un polysaccharide conforme à l'invention est constitué de n unités hexasaccharidiques (n étant égal ou supérieur à 1) répondant à la formule (I) ci-après :

Un polysaccharide conforme à l'invention peut par exemple être purifié à partir des exopolysaccharides produits par la souche ST716. Cette souche a été déposée par IFREMER, selon le Traité de Budapest, le 17 octobre 1995 auprès de la CNCM (Collection Nationale de Cultures de Microorganismes) tenue par l'Institut Pasteur, 25 rue du Docteur Roux, à Paris, sous le numéro I-1627.

Selon un mode de réalisation préféré de la présente invention, un polysaccharide de formule (I), purifié par chromatographie d'échange d'anions à partir du mélange d'exopolysaccharides sécrété par Alteromonas *macleodii* subsp. *Fijiensis,* possède un poids moléculaire moyen (M_{w}) de l'ordre de 10⁶ Da, soit un degré de polymérisation DPₙ moyen de l'ordre de 800.

La composition du polysaccharide conforme à l'invention et sa structure hautement ramifiée lui confèrent les caractéristiques rhéologiques suivantes :
- il possède, pour un poids moléculaire moyen (M_{w}) de l'ordre de 10⁶ Da, une viscosité intrinsèque η de l'ordre de 2600 ml.g⁻¹,
- sa viscosité augmente en présence d'ions Ca²⁺, mais il reste stable en présence d'ions Mg²⁺ et K⁺ ;
- il possède un pouvoir épaississant et un comportement rhéofluidifiant ; ces propriétés épaississantes sont stables pour un pH compris entre 4,5 et 9.

L'invention a donc également pour objet l'utilisation d'un polysaccharide selon l'invention en tant qu'agent épaississant, ainsi que en tant qu'agent rhéofluidifiant.

Ces caractéristiques rhéologiques, jointes à son hydrophilie et à sa solubilité, confèrent au polysaccharide conforme à l'invention un grand intérêt pour l'utilisation dans diverses industries, notamment dans l'agro-alimentaire, comme agent de texture, stabilisant et/ou épaississant.

C'est pourquoi l'invention concerne également l'utilisation d'un polysaccharide selon l'invention en tant qu'agent de texture, notamment stabilisant et/ou épaississant dans l'industrie agro-alimentaire.

Elle a plus particulièrement pour objet l'utilisation d'un polysaccharide selon l'invention pour la préparation d'un produit destiné à l'alimentation humaine ou animale.

Les polysaccharides conformes à l'invention peuvent, par exemple, être utilisés pour conférer la consistance souhaitée à des produits liquides, crémeux, pâteux, gélifiés ou semi-solides, tout en améliorant et/ou stabilisant leur texture.

Ils permettent en particulier de stabiliser les produits soumis à des variations importantes de température, par exemple lors de la cuisson ou du traitement UHT, ou lors de la congélation où ils permettent de prévenir la formation de cristaux de glace.

Ils peuvent également être utilisés comme rétenteur d'humidité dans des produits solides, pour leur conférer et leur conserver une texture moelleuse.

Les polysaccharides conformes à l'invention s'incorporent très facilement et de manière homogène à toutes les préparations effectuées en présence d'eau. Leur utilisation dans le cadre de procédés industriels est donc très simple, et, en outre, ils sont particulièrement appropriés pour la fabrication de produits « prêts à l'emploi » à reconstituer par le consommateur final.

Les polysaccharides conformes à l'invention peuvent également être utilisés pour la clarification de produits liquides à usage alimentaire, tels que des vins ou du vinaigre.

La présente invention englobe également des produits destinés à l'alimentation humaine ou animale, comprenant au moins un polysaccharide conforme à l'invention.

Les polysaccharides conformes à l'invention sont avantageusement présents dans les produits en cause à raison de 0,01 à 10%, de préférence 0,05 à 5% en poids, par rapport au poids total des ingrédients.

La présente invention sera mieux comprise à l'aide du complément de description qui va suivre, qui se réfère à des exemples non-limitatifs illustrant la purification et la caractérisation d'un polysaccharide conforme à l'invention, ainsi que ses propriétés et ses utilisations.

### EXEMPLE 1 : OBTENTION D'UNE PRÉPARATION DE POLYSACCHARIDE PURIFIÉ.

Les exopolysaccharides sécrétés par la souche *d'Alteromonas macleodii* subsp. *fijiensis* C.N.C.M I-1627, sont obtenus à partir de cultures de cette bactérie par précipitation à l'éthanol, comme décrit par RAGUENES et al., [Applied and Environmental Microbiology, 62(1), pp. 67-73, (1996)].

Après dissolution dans du tampon Tris (50mM, pH 7,5), le mélange d'exopolysaccharides est déposé sur une colonne échangeuse d'anions (gel SEPHAROSE CL-6B). L'élution est réalisée avec un gradient de 0,1 à 1M en NaCl dans le même tampon.

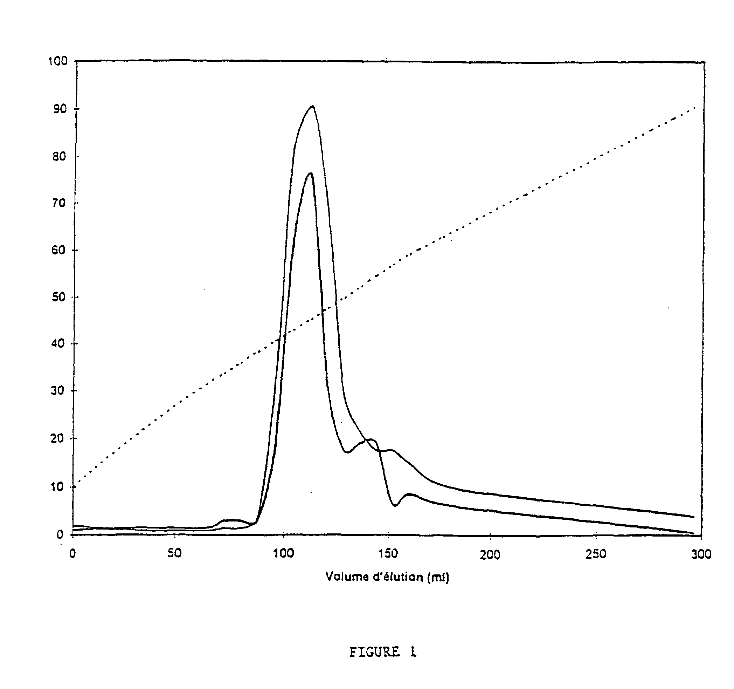

Le profil d'élution est représenté sur la Figure 1. Les fractions du pic principal correspondant à une concentration en NaCl de 450 mM ont été regroupées, dialysées et lyophilisées.

Les analyses effectuées sur ces fractions montrent l'absence de protéines, et permettent d'estimer les teneurs en acides uroniques et hexoses à 38% et 37% respectivement.

### EXEMPLE 2 : DÉTERMINATION DES CARACTÉRISTIQUES PHYSICOCHIMIQUES DU POLYSACCHARIDE.

### Composition

Le polysaccharide obtenu comme décrit à l'Exemple 1, est soumis à une méthanolyse acide et les méthylglycosides sont convertis en dérivés triméthylsilylés correspondants selon la méthode de MONTREUIL et al. [Carbohydrate analysis: a practical approach, Chaplin M.F. and Kennedy J.K. (Eds), I.R.L. Press Oxford, Washington D.C., Glycoproteins pp.143-204 (1986)], puis analysés par chromatographie en phase gazeuse couplée à un spectromètre de masse.

Les oses neutres sont également analysés sous forme d'acétates d'alditol après hydrolyse du polysaccharide, suivie d'une réduction et d'une acétylation selon la méthode de BLAKENEY et al. [Carbohydr. Res., 113, pp. 291-299, (1983)].

La teneur en acide pyruvique est estimée grâce à une méthode de dosage colorimétrique utilisant le 2,4-dinitrophénylhydrazone [SLONEKER et al., Nature, 194, pp. 478-479, (1962)].

La configuration absolue de chacun des résidus constitutifs du polysaccharide a été déterminée selon la méthode de GERWIG et al. [Carbohydr. Res., 62, pp.349-357, (1978)]. Les résidus glycosidiques issus de l'hydrolyse du polysaccharide réagissent avec du (+)2-butanol en présence d'acide trifluoroacétique. Les dérivés chiraux ainsi obtenus sont triméthylsilylés puis analysés par chromatographie en phase gazeuse.

L'analyse des résidus sous forme d'acétates d'alditol et de méthylglycosides triméthylsilylés indique la présence de glucose, galactose, mannose, acide glucuronique et acide galacturonique dans les proportions relatives 1:1:1:2:1 (1:1,1:0,6:1,1:0,6 pour le polymère brut). Une configuration D a été établie pour chacun des résidus. La teneur en acide pyruvique est estimée à 7% en poids par dosage colorimétrique, ce qui correspond à la substitution de tous les résidus de mannose.

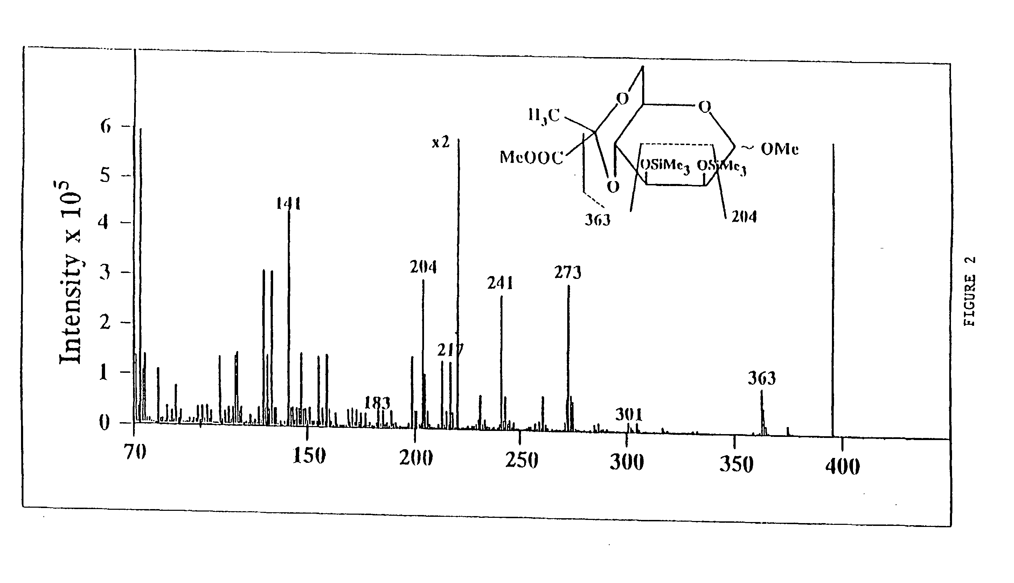

Les résultats de l'analyse en chromatographie en phase gazeuse couplée à la spectrométrie de masse des méthylglycosides triméthylsilylés sont illustrés par la Figure 2. Cette analyse permet de situer les liaisons des groupements pyruvate au niveau des positions 4 et 6 du résidu de mannose.

### Nature des liaisons glycosidiques

L'analyse du polysaccharide par méthylation a permis de déterminer la forme cyclique (pyranose ou furanose) et la nature des liaisons glycosidiques de chacun des résidus entrant dans sa composition. Selon la méthode d'HAKOMORI [J. Biochem, 55(2), pp. 205-208, (1964)] modifiée par D'AMBRA et al. [Carbohydr. Res., 177, pp. 111-116, (1988)], les fonctions hydroxyles libres du polysaccharide sont méthylées grâce à l'action du lithium méthylsufinyle carbanion et de l'iodure de méthyle dans le diméthylsulfoxide. Les fonctions hydroxyles engagées dans des liaisons sont ensuite libérées grâce à une hydrolyse. Les acétates d'alditol issus de la réduction puis de l'acétylation des résidus partiellement méthylés sont analysés par couplage chromatographie en phase gazeuse/spectrométrie de masse. Leur nature, caractérisée par la position de leurs groupements méthyles, définit la forme cyclique ainsi que la position des liaisons glycosidiques des résidus correspondants.

Cette analyse montre la présence de glucose et de galactose substitués en 4, de mannose di-substitué en 4 et en 6 (confirmant les sites de substitution du groupement pyruvate), d'acide glucuronique substitué en 3, d'acide glucuronique substitué en 4 et d'acide galacturonique di-substitué en 3 et en 4. Ce dernier constitue donc un point de branchement d'une unité répétitive hexasaccharidique ramifiée dont l'extrémité de la chaîne latérale est le résidu de mannose pyruvaté. Tous les résidus sont de forme cyclique pyranose.

### Localisation des acides uroniques

Pour localiser les acides uroniques présents dans l'unité répétitive, on traite en milieu basique le polysaccharide préalablement méthylé, selon la méthode de ASPINALL et al. [Carbohydr. Res., 57, pp. C23-C26, (1977)].

Cette analyse met en évidence la présence d'un unique composé possédant un groupement *O*-éthyle, l'acétate d'alditol dérivé du résidu de galactose. L'unité répétitive comprend donc une séquence de trois résidus d'acide uronique, liée en position 4 du résidu de galactose.

### Spectroscopie de Résonance Magnétique Nucléaire

Après dépyruvatation (grâce à un traitement dans de l'acide acétique 2% 2 heures à 100°C), et dissolution dans une eau deutériée additionnée de NaCl du polysaccharide, les spectres RMN ont été enregistrés à 320K sur des appareils BRUKER AMX-500 et AMX-600. Les analyses à haut champ en mode homonucléaire "TOCSY" (Total Observed Correlation SpectroscopY) et "COSY" (Correlation Observed SpectroscopY) ainsi que le spectre obtenu à haut champ en mode hétéronucléaire "HSQC" (Heteronuclear Single Quantum Coherence) ont permis l'attribution des signaux aux protons et carbones de chaque résidu.

La configuration α/β des liaisons glycosidiques est définie par la valeur des déplacements chimiques des signaux correspondants aux carbones et protons anomériques. L'analyse en mode homonucléaire "NOESY" (Nuclear Overhauser Enhancement SpectroscopY) détermine l'enchaînement des résidus de l'unité répétitive.

L'analyse du spectre HSQC a permis d'identifier six résidus distincts constituant l'unité répétitive, en accord avec les résultats de la méthylation. La configuration des liaisons glycosidiques est déterminée d'après la valeur des déplacements chimiques de leurs protons et carbones anomériques. Une attribution de la majorité des signaux aux protons des différents résidus est réalisée grâce à l'analyse des spectres TOCSY et COSY. L'interprétation du spectre NOESY en complément des résultats de la β-élimination a permis de définir l'enchaînement des résidus :

### EXEMPLE 3 : DETERMINATION DES PROPRIETES RHEOLOGIQUES DU POLYSACCHARIDE.

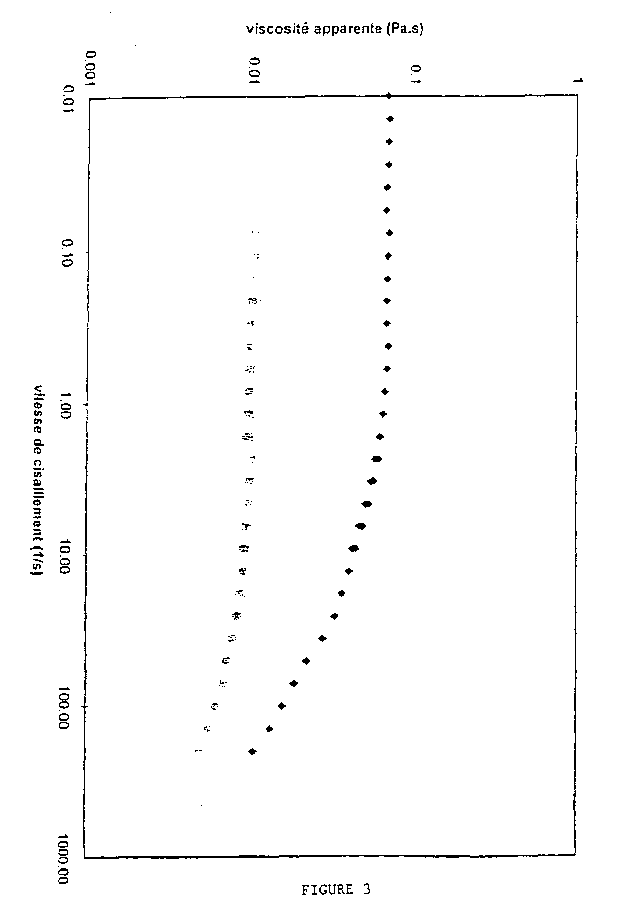

L'étude des propriétés d'écoulement du polysaccharide en solution a été menée en régime semi-dilué pour des concentrations en polymère de 1 g/l ( ) et 2 g/l (◆) (soit 0,1% et 0,2%) dans une eau additionnée de NaCl 0,1M. Elle se traduit par l'établissement de courbes d'écoulement représentées par la variation de la viscosité apparente en fonction de la vitesse de cisaillement, pendant l'application d'un cycle d'augmentation et de diminution de la vitesse en continu. La figure 3 met en évidence le caractère épaississant du polysaccharide en solution, avec une viscosité dépendante de la concentration en polymère. De plus, l'allure de la courbe d'écoulement démontre un comportement rhéofluidifiant, avec l'existence d'un plateau dit « newtonien » dans le domaine des faibles valeurs de vitesse de cisaillement suivi d'une diminution de la viscosité apparente en fonction de la vitesse de cisaillement pour des valeurs élevées de vitesse.

L'établissement de telles courbes d'écoulement en régime dilué, pour des concentrations en polysaccharide de 0,02 à 0,2 g/l (0,002% à 0,02%), a permis la détermination de sa viscosité intrinsèque [η] (volume hydrodynamique occupé par un gramme de polymère dans un solvant donné) dans une solution de NaCl 0,1M. La viscosité intrinsèque a ainsi été évaluée à 2600 ml/g.

L'ensemble des mesures a été effectué à 20°C en utilisant un viscosimètre à cylindres co-axiaux LOW SHEAR 40 (CONTRAVES).

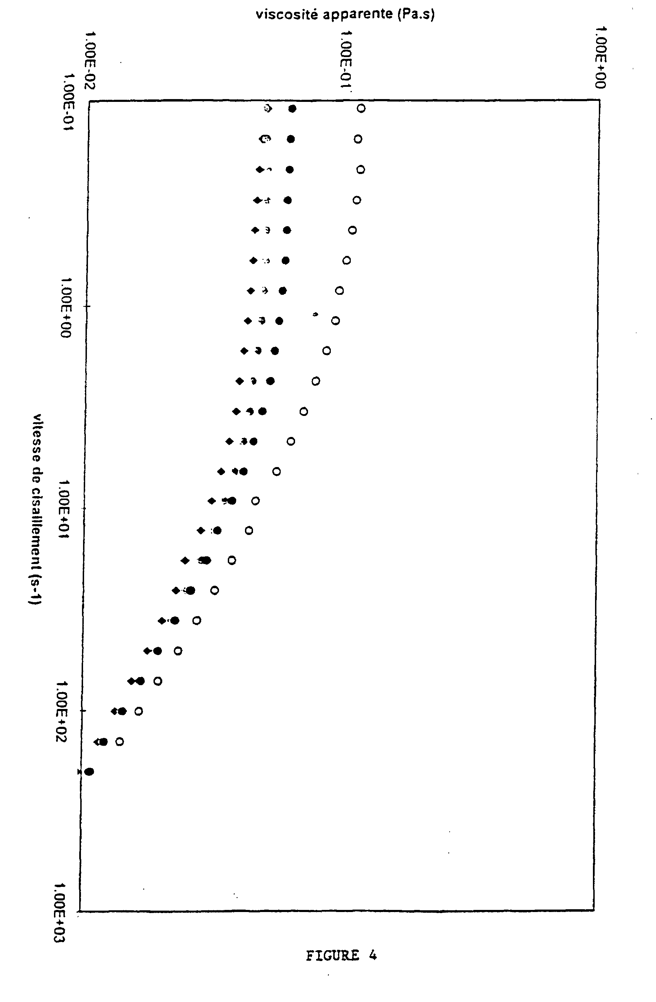

Les courbes d'écoulement de solutions du polysaccharide purifié conforme à l'invention à 2 g/l, en solvant aqueux de force ionique 0,1 M, ont été établies en présence de différents ions. Ces courbes, qui sont représentées sur la Figure 4, (Mg²⁺ :**◆** ; K⁺ : ; Na⁺: ● ; Ca²⁺ :○) montrent que la viscosité du polysaccharide augmente notablement en présence d'ions Ca²⁺, mais n'est en revanche pas influencée par la présence d'ions K⁺ ou Mg²⁺).

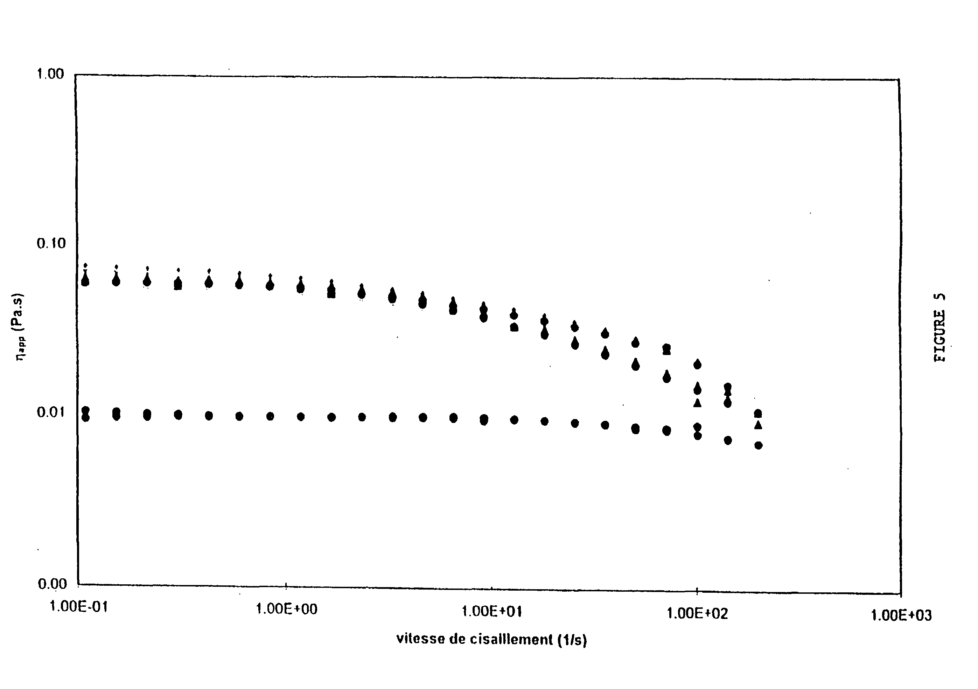

La Figure 5 représente les courbes d'écoulement de solutions de polysaccharide conforme à l'invention, à une concentration de 2 g/l dans NaCl 0,1 M, à différents pH (● =pH3 ; =pH4,5 ; **◆** =pH6 ; ●= pH7 ; ◆ =pH9). Ces courbes permettent de conclure à la stabilité des propriétés épaississantes du polysaccharide conforme à l'invention dans une gamme de pH comprise entre 4,5 et 9.

### EXEMPLE 4 : MISE EN OEUVRE D'UN POLYSACCHARIDE CONFORME A L'INVENTION POUR LA PREPARATION DE PRODUITS ALIMENTAIRES

Le Tableau I ci-après regroupe quelques exemples d'incorporation d'un polysaccharide conforme à l'invention dans des produits alimentaires, en indiquant la dose, en poids par rapport au poids total des ingrédients, généralement préféré pour chacun d'entre eux.

**TABLEAU I**

| | **Dose** |
|---|---|
| **Produits laitiers et dérivés :** | |
| Glace et crème glacée | 0,1 à 1% |
| Crème, crème à fouetter, nappages | 0,2 à 0,5% |
| Desserts et laits gélifiés | 0,1 à 0,5% |
| Mousse | 0,5 à 2% |
| Crème pâtissière | 0,5 à 2% |
| Desserts, flancs | 0,3 à 0,8% |
| Autres flans, puddings | 0,3 à 0,8% |
| Desserts appertisés | 0,1 à 0,8% |
| Desserts laitiers, crèmes desserts | 0,2 0 1% |
| Fromages fondus et à tartiner | 0,3 à 1 % |

| **Viande et Charcuterie :** | |
|---|---|
| Charcuterie | 0,1 à 1,5% |
| liant dans les pâtes fines | |
| gelée de couverture des produits de charcuterie ou à base de viande | |
| conserves de pâtés | |
| Enrobage des viandes et poissons | 0,1 à 3% |

| **Produits de Nutrition Clinique :** | |
|---|---|
| Confiserie (gels à l'eau), fruités et aux fruits : gelées, confiserie gélifiée | 0,1 à 3% |
| Potages deshydratés ou prêts à l'emploi | 0,1 à 0,6% |
| Stabilisation de solutions liquides ou à reconstituer (solution orale, entérale ou parentérale) | 0,1 à 0,3% |
| Bouillies | 0,1 à 0,3% |
| Boisson et crème dessert UHT | 0,1 à 0,5% |
| Plats cuisinés et mixés | 0,1 à 0,8% |
| Nappage et sauces diététiques | 0,1 à 0,5% |

| **Autres produits alimentaires :** | |
|---|---|
| Produits reconstitués : pulpes de fruits, légumes, viande, poisson | 0,5 à 1,5% |
| Nappage pâtisserie congelé ou en conserve | 0,1 à 0,8% |
| Sauces : pour salades et divers sauces émulsionnées ou non et mayonnaise | 0,1 à 1% |
| Sauces et condiments soumis à la stérilisation et servant en plats cuisinés | 0,1 à 1% |
| Produits pour l'alimentation animale | 0,1 à 3% |
| Confitures et gelées | 0,1 à 2% |
| Sodas aux extraits végétaux | 0,1 à 0,3% |
| Clarification des vins et du vinaigre | 0,1 à 0,5% |
| Desserts en poudre à préparer | 0,5 à 2% |
| Rétenteur d'humidité en boulangerie et en pâtisserie | 0,1 à 0,5% |

## Revendications

1. Polysaccharide purifié constitué de glucose, de galactose, d'acide glucuronique, d'acide galacturonique, et de mannose pyruvaté **caractérisé en ce que** lesdits résidus sont associés en une unité répétitive hexasaccharidique de formule (I) : ledit polysaccharide comprenant n unités saccharidiques de formule (I), n étant égal ou supérieur à 1.

2. Polysaccharide selon la revendication 1, **caractérisé en ce qu'**il possède un poids moléculaire moyen (M_{w}) de l'ordre de 10⁶ Da, soit un degré de polymérisation DPₙ moyen de l'ordre de 800, et **en ce qu'**il possède une viscosité intrinsèque η d'environ 2600 ml.g⁻¹.

3. Utilisation d'un polysaccharide selon la revendication 1 ou 2 en tant qu'agent épaississant.

4. Utilisation d'un polysaccharide selon l'une des revendications 1 ou 2 en tant qu'agent rhéofluidifiant.

5. Utilisation d'un polysaccharide selon l'une des revendications 1 ou 2 en tant qu'agent de texture, notamment stabilisant et/ou épaississant, dans l'industrie agro-alimentaire.

6. Utilisation d'un polysaccharide selon l'une quelconque des revendications 1 ou 2 pour la fabrication d'un produit destiné à l'alimentation humaine ou animale.

7. Produit destiné à l'alimentation humaine ou animale **caractérisé en ce qu'**il comprend au moins un polysaccharide selon la revendication 1 ou 2.

8. Produit selon la revendication 7, **caractérisé en ce qu'**il comprend de 0,01 à 10% en poids, de préférence de 0,05 à 5% en poids par rapport au poids total des ingrédients qui la constituent, d'un polysaccharide selon la revendication 1 ou 2.

## Claims

1. A purified polysaccharide consisting of glucose, galactose, glururonic acid, galacturonic acid and pyruvate-substituted mannose, **characterized in that** said residues are combined in a repetitive hexasaccharide unit of the formula (I): said polysaccharide comprising n saccharide units of formula (I), with n being equal to or greater than 1.

2. A polysaccharide as claimed in claim 1, **characterized in that** it possesses an average molecular weight (M_{w}) of the order of 10⁶ Da, that is an average degree of polymerization, DPₙ, of the order of 800, and **in that** it possesses an intrinsic viscosity, η, of approximately 2 600 ml.g⁻¹.

3. The use of a polysaccharide as claimed in claim 1 or 2 as a thickening agent.

4. The use of a polysaccharide as claimed in one of claims 1 or 2 as a rheofluidifying agent.

5. The use of a polysaccharide as claimed in one of claims 1 or 2 as a texturizing agent, in particular stabilizing and/or thickening agent, in the agri-food industry.

6. The use of a polysaccharide as claimed in either one of claims 1 or 2 for making a product which is intended for feeding to humans or animals.

7. A product which is intended for feeding to humans or animals, **characterized in that** it comprises at least one polysaccharide as claimed in claim 1 or 2.

8. A product as claimed in claim 7, **characterized in that** it comprises from 0.01 to 10% by weight, preferably from 0.05 to 5% by weight, based on the total weight of the ingredients of which it consists, of a polysaccharide as claimed in claim 1 or 2.

## Patentansprüche

1. Gereinigtes Polysaccharid, das aus Glucose, Galactose, Glucuronsäure, Galacturonsäure und pyruvatisierter Mannose besteht, **dadurch gekennzeichnet, daß** diese Reste in einer Hexasaccharid-Wiederholungseinheit der Formel (I) verbunden sind: wobei das Polysaccharid n Saccharideinheiten der Formel (I) umfaßt, wobei n gleich oder höher 1 ist

2. Polysaccharid nach Anspruch 1, **dadurch gekennzeichnet, daß** es eine massegemittelte Molekülmasse (M_{w}) in der Größenordnung von 10⁶ Da besitzt, bei einem mittleren Polymerisationsgrad DPₙ in der Größenordnung von 800, und dadurch, daß es eine innere Viskosität η von etwa 2600 ml·g⁻¹ besitzt.

3. Verwendung eines Polysaccharids nach Anspruch 1 oder 2 als Verdickungsmittel.

4. Verwendung eines Polysaccharids nach einem der Ansprüche 1 oder 2 als Fließverbesserer.

5. Verwendung eines Polysaccharids nach einem der Ansprüche 1 oder 2 als insbesondere stabilisierendes und/oder verdickendes Texturmittel in der Futtermittelindustrie.

6. Verwendung eines Polysaccharids nach irgendeinem der Ansprüche 1 oder 2 zur Herstellung eines Produkts zur menschlichen oder tierischen Ernährung.

7. Produkt zur menschlichen oder tierischen Ernährung, **dadurch gekennzeichnet, daß** es wenigstens ein Polysaccharid nach Anspruch 1 oder 2 umfaßt.

8. Produkt nach Anspruch 7, **dadurch gekennzeichnet, daß** es 0,01 bis 10 Gew.-%, vorzugsweise 0,05 bis 5 Gew.-%, bezogen auf das Gesamtgewicht der Bestandteile, aus denen es besteht, eines Polysaccharids nach Anspruch 1 oder 2 umfaßt.
